# EUROPEAN PATENT APPLICATION

(11) **EP 4 663 319 A1**
(43) Date of publication of application: **17.12.2025**
(21) Application number: 24753139.5
(22) Date of filing: 25.01.2024
(51) Int. Cl.: B21D 19/16, B21D 19/08, B21D 19/10, B21D 37/08, B21D 39/00, H01M 50/107, H01M 50/152

(54) **MANUFACTURING METHOD AND MOLD FOR CYLINDRICAL MEMBER**

(30) Priority: 08.02.2023 JP 2023017258
(71) Applicant: NIPPON STEEL CORPORATION, Chiyoda-ku Tokyo 100-8071 (JP)
(72) Inventor: SUGAMA, Atsushi, Tokyo 100-8071 (JP); NISHIO, Katsuhide, Tokyo 100-8071 (JP)
(74) Representative: Zimmermann & Partner Patentanwälte mbB
(86) International application number: PCT/JP2024/002186
(87) International publication number: WO 2024/166694

(57) **Abstract**

A method for manufacturing a cylindrical member (10) includes a preparation step of preparing a workpiece (20) and a bending processing step of bending an end portion (23) of the workpiece (20) to an inner circumferential side using a lower die (40) and an upper die (30). A recessed processing surface (31) of the upper die (30) includes a first portion (311) and a second portion (312). The first portion (311) extends toward a side opposite to the workpiece (20) in the axial direction and toward the inner circumferential side of the workpiece (20). The second portion (312) has a linear shape and extends from the first portion (311) to the inner circumferential side of the workpiece (20). In the bending processing step, the first portion (311) guides the end portion (23) to the inner circumferential side of the workpiece (20), and the second portion (312) clamps the end portion (23) together with the lower die (40).

## Description

### TECHNICAL FIELD

The present disclosure relates to a method for manufacturing a cylindrical member. In addition, the present disclosure relates to a die, and more specifically to a die for bending an end portion of a cylindrical workpiece to the inner circumferential side.

### BACKGROUND ART

When a cylindrical member such as a battery is to be manufactured, for example, there are cases where a cylindrical workpiece is subjected to processing for bending an open end portion of the workpiece to the inner circumferential side. By bending the open end portion of the workpiece, a component disposed in the cylindrical member can be fixed by the open end portion. Such processing is generally called bending and crimping processing.

For example, Patent Literature 1 discloses bending and crimping processing in which the open end portion of a cylindrical workpiece is curled in three steps (curling processing). In Patent Literature 1, as primary curling processing, a curl roller is rotated while being pressed against the open end portion of the workpiece, to form a curled portion at the open end portion. Then, as secondary curling processing, the curled portion of the workpiece is held by a collet and the curled portion is squeezed. Thereafter, as tertiary curling processing, a crimping die is pressed from above against the innermost edge of the curled portion that is slightly raised through the secondary curling processing, and the innermost edge is bent downward.

### CITATION LIST

### PATENT LITERATURE

Patent Literature 1: JP H8-31393A

### SUMMARY OF INVENTION

### TECHNICAL PROBLEM

In Patent Literature 1, the open end portion of the workpiece is bent to the inner circumferential side through the three-step curling processing. In Patent Literature 1, the curling processing needs to be performed in three steps, and the driving direction of a tool that processes the open end portion of the workpiece changes for each curling processing step, making the processing for bending the open end portion of the workpiece complicated.

In addition, in Patent Literature 1, through the three-step curling processing, the open end portion of the workpiece is formed into a curled shape as a whole. For example, when the specification of the cylindrical member to be manufactured requires that at least a part of the open end portion of the workpiece that is bent to the inner circumferential side be linear, such a shape cannot be formed using the technique described in Patent Literature 1.

An object of the present disclosure is to provide a method for manufacturing a cylindrical member, by which the end portion of a workpiece can be easily bent and at least a portion of the end portion bent to the inner circumferential side can be formed into a linear shape.

### SOLUTION TO PROBLEM

A method for manufacturing a cylindrical member according to the present disclosure includes: a preparation step of preparing a cylindrical workpiece; and a bending processing step of bending an end portion of the workpiece in an axial direction of the workpiece to an inner circumferential side of the workpiece using a lower die that is disposed in the workpiece and an upper die that undergoes relative movement toward the workpiece along the axial direction. The upper die includes a recessed processing surface. The processing surface is provided at a position corresponding to the end portion of the workpiece on a surface of the upper die facing the workpiece in the axial direction. The processing surface includes a first portion and a second portion. The first portion extends toward a side opposite to the workpiece in the axial direction of the workpiece and toward the inner circumferential side of the workpiece, in a cross-sectional view including a central axis of the workpiece. The first portion guides the end portion of the workpiece to the inner circumferential side of the workpiece in the bending processing step. The second portion is continuous with the first portion. The second portion has a linear shape and extends from the first portion to the inner circumferential side of the workpiece, in a cross-sectional view including the central axis of the workpiece. The second portion clamps the end portion of the workpiece together with the lower die in the bending processing step. In a cross-sectional view including the central axis of the workpiece, an angle θ formed between an extension line of the second portion and an extension line of the end portion of the workpiece before a start of the bending processing step is 45° or more and less than 90°.

Another method for manufacturing a cylindrical member according to the present disclosure includes: a preparation step of preparing a cylindrical workpiece; and a bending processing step of bending an end portion of the workpiece in an axial direction of the workpiece to an inner circumferential side of the workpiece using a lower die that is disposed in the workpiece and an upper die that undergoes relative movement toward the workpiece along the axial direction. The upper die includes a recessed processing surface. The processing surface is provided at a position corresponding to the end portion of the workpiece on a surface of the upper die facing the workpiece in the axial direction. The processing surface includes a first portion and a second portion. The first portion extends toward a side opposite to the workpiece in the axial direction of the workpiece and toward the inner circumferential side of the workpiece, in a cross-sectional view including a central axis of the workpiece. The second portion has a linear shape and is disposed on the inner circumferential side of the workpiece relative to the first portion, in a cross-sectional view including the central axis of the workpiece. The upper die includes a first upper die and a second upper die. The first upper die includes at least a portion of the first portion of the processing surface. The second upper die is separate from the first upper die. The second upper die is disposed on the inner circumferential side of the workpiece relative to the first upper die. The second upper die includes at least a portion of the second portion of the processing surface. In the bending processing step, the end portion of the workpiece is guided by the first upper die to the inner circumferential side of the workpiece, and the end portion of the workpiece is then clamped by the second upper die and the lower die.

### ADVANTAGEOUS EFFECTS OF INVENTION

With the method for manufacturing a cylindrical member according to the present disclosure, the end portion of a workpiece can be easily bent. Also, with the method for manufacturing a cylindrical member according to the present disclosure, at least a portion of the end portion of the workpiece that is bent to the inner circumferential side can be formed into a linear shape.

### BRIEF DESCRIPTION OF DRAWINGS

[FIG. 1] FIG. 1 is perspective view of a cylindrical member manufactured using a manufacturing method according to a first embodiment.
[FIG. 2A] FIG. 2A is a schematic diagram for illustrating the method for manufacturing a cylindrical member according to the first embodiment.
[FIG. 2B] FIG. 2B is a schematic diagram for illustrating the method for manufacturing a cylindrical member according to the first embodiment.
[FIG. 2C] FIG. 2C is a schematic diagram for illustrating the method for manufacturing a cylindrical member according to the first embodiment.
[FIG. 2D] FIG. 2D is a schematic diagram for illustrating the method for manufacturing a cylindrical member according to the first embodiment.
[FIG. 3A] FIG. 3A is a schematic diagram for illustrating a method for manufacturing a cylindrical member according to a second embodiment.
[FIG. 3B] FIG. 3B is a schematic diagram for illustrating the method for manufacturing a cylindrical member according to the second embodiment.
[FIG. 3C] FIG. 3C is a schematic diagram for illustrating the method for manufacturing a cylindrical member according to the second embodiment.
[FIG. 3D] FIG. 3D is a schematic diagram for illustrating the method for manufacturing a cylindrical member according to the second embodiment.
[FIG. 4] FIG. 4 is a schematic diagram showing a method for manufacturing a cylindrical member according to a modified example of the first embodiment.
[FIG. 5] FIG. 5 is a schematic diagram showing a method for manufacturing a cylindrical member according to a modified example of the second embodiment.
[FIG. 6] FIG. 6 is a schematic diagram showing the method for manufacturing a cylindrical member according to a modified example of each embodiment.

### DESCRIPTION OF EMBODIMENTS

A method for manufacturing a cylindrical member according to an embodiment includes: a preparation step of preparing a cylindrical workpiece; and a bending processing step of bending an end portion of the workpiece in an axial direction of the workpiece to an inner circumferential side of the workpiece using a lower die that is disposed in the workpiece and an upper die that undergoes relative movement toward the workpiece along the axial direction. The upper die includes a recessed processing surface. The processing surface is provided at a position corresponding to the end portion of the workpiece on a surface of the upper die facing the workpiece in the axial direction. The processing surface includes a first portion and a second portion. The first portion extends toward a side opposite to the workpiece in the axial direction of the workpiece and toward the inner circumferential side of the workpiece, in a cross-sectional view including a central axis of the workpiece. The first portion guides the end portion of the workpiece to the inner circumferential side of the workpiece in the bending processing step. The second portion is continuous with the first portion. The second portion has a linear shape and extends from the first portion to the inner circumferential side of the workpiece, in a cross-sectional view including the central axis of the workpiece. The second portion clamps the end portion of the workpiece together with the lower die in the bending processing step. In a cross-sectional view including the central axis of the workpiece, an angle θ formed between an extension line of the second portion and an extension line of an end portion of the workpiece before a start of the bending processing step is 45° or more and less than 90° (first configuration).

A method for manufacturing a cylindrical member according to another embodiment includes: a preparation step of preparing a cylindrical workpiece; and a bending processing step of bending an end portion of the workpiece in an axial direction of the workpiece to an inner circumferential side of the workpiece using a lower die that is disposed in the workpiece and an upper die that undergoes relative movement toward the workpiece along the axial direction. The upper die includes a recessed processing surface. The processing surface is provided at a position corresponding to the end portion of the workpiece on a surface of the upper die facing the workpiece in the axial direction. The processing surface includes a first portion and a second portion. The first portion extends toward a side opposite to the workpiece in the axial direction of the workpiece and toward the inner circumferential side of the workpiece, in a cross-sectional view including a central axis of the workpiece. The second portion has a linear shape and is disposed on the inner circumferential side of the workpiece relative to the first portion, in a cross-sectional view including the central axis of the workpiece. The upper die includes a first upper die and a second upper die. The first upper die includes at least a portion of the first portion of the processing surface. The second upper die is separate from the first upper die. The second upper die is disposed on the inner circumferential side of the workpiece relative to the first upper die. The second upper die includes at least a portion of the second portion of the processing surface. In the bending processing step, the end portion of the workpiece is guided by the first upper die to the inner circumferential side of the workpiece, and the end portion of the workpiece is then clamped by the second upper die and the lower die (second configuration).

In the method for manufacturing a cylindrical member according to the first and second configurations, the end portion of the workpiece is bent to the inner circumferential side simply by causing the upper die to undergo relative movement toward the workpiece and the lower die disposed in the workpiece along the axial direction of the workpiece. Therefore, the bending processing step is not complicated, and the end portion of the workpiece can be easily bent.

In the method for manufacturing a cylindrical member according to the first and second configurations, the processing surface of the upper die is provided with the first portion that guides the end portion of the workpiece to the inner circumferential side, and the second portion that clamps the end portion of the workpiece together with the lower die. The second portion is disposed on the inner circumferential side of the workpiece relative to the first portion and has a linear shape in a cross-sectional view including the central axis of the workpiece. In this case, as a result of the end portion of the workpiece guided by the first portion being clamped by the second portion and the lower die, the clamped portion can be given a linear shape. Therefore, at least a portion of the end portion of the workpiece that is bent to the inner circumferential side can be formed into a linear shape.

In the method for manufacturing a cylindrical member according to the first configuration, the angle θ formed between the extension line of the second portion of the processing surface of the upper die and the extension line of the end portion of the workpiece before a start of the bending processing step is 45° or more and less than 90°. This makes it less likely for the end portion of the workpiece to get caught on the boundary between the first portion and the second portion of the processing surface when the end portion of the workpiece is bent by the upper die to the inner circumferential side. Therefore, in the bending processing step, the occurrence of buckling in the end portion of the workpiece can be suppressed.

In the method for manufacturing a cylindrical member according to the second configuration, the upper die includes the first upper die and the second upper die that are separate bodies, and after the end portion of the workpiece is guided by the first upper die to the inner circumferential side, the second upper die clamps the end portion of the workpiece together with the lower die. This makes it possible to suppress the occurrence of buckling in the end portion of the workpiece when the end portion of the workpiece is bent by the upper die to the inner circumferential side. For example, even when the angle θ formed between the extension line of the second portion of the processing surface of the upper die and the extension line of the end portion of the workpiece before a start of the bending processing step is small, the end portion of the workpiece is less likely to get caught on the upper die, and buckling of the end portion of the workpiece can be suppressed.

In the method for manufacturing a cylindrical member according to the first or second configuration, the first portion may have a curved shape recessed in a cross-sectional view including the central axis of the workpiece (third configuration).

In the method for manufacturing a cylindrical member according to the first or second configuration, the first portion may have a linear shape in a cross-sectional view including the central axis of the workpiece (fourth configuration).

In the method for manufacturing a cylindrical member according to any one of the first to fourth configurations, the workpiece is made of a steel material having a tensile strength of 290 MPa or more, for example (fifth configuration).

In the method for manufacturing a cylindrical member according to any one of the first to fifth configurations, the end portion of the workpiece may have a plate thickness of 3.0 mm or less (sixth configuration).

In the method for manufacturing a cylindrical member according to any one of the first to sixth configurations, the cylindrical member may be a bottomed cylindrical battery that accommodates an electrode body. In this case, the lower die is a sealing body (seventh configuration).

The die according to an embodiment is a die for bending an end portion of a cylindrical workpiece to an inner circumferential side. The die includes an upper die and a lower die. The upper die has a round columnar shape. One surface of two surfaces of the upper die in the axial direction is provided with a recessed processing surface. The lower die has a round columnar shape. Of two surfaces of the lower die in an axial direction, a surface facing the upper die when the die is in use is provided with a protruding processing surface that corresponds to the processing surface of the upper die. The processing surface of the upper die includes a first portion and a second portion. On the processing surface of the upper die, the first portion extends toward a side opposite to the lower die and toward the inner circumferential side of the upper die, in a cross-sectional view including a central axis of the upper die and the lower die. On the processing surface of the upper die, the second portion is continuous with the first portion. On the processing surface of the upper die, the second portion has a linear shape and extends from the first portion toward the inner circumferential side of the upper die, in a cross-sectional view including the central axis. The processing surface of the lower die includes the first portion and the second portion. On the processing surface of the lower die, the first portion is disposed at a position corresponding to the first portion of the processing surface of the upper die, and is continuous with a side surface of the lower die. On the processing surface of the lower die, the second portion is continuous with the first portion. The second portion of the processing surface of the lower die has a shape corresponding to the second portion of the processing surface of the upper die. In a cross-sectional view including the central axis, an angle θ formed between the extension line of the second portion of the processing surface of the upper die and the extension line of the side surface of the lower die is 45° or more and less than 90° (eighth configuration).

The die according to another embodiment is a die for bending an end portion of a cylindrical workpiece to an inner circumferential side. The die includes an upper die and a lower die. The upper die has a round columnar shape. One surface of two surfaces of the upper die in an axial direction is provided with a recessed processing surface. The lower die has a round columnar shape. Of two surfaces of the lower die in the axial direction, a surface facing the upper die when the die is in use is provided with a protruding processing surface that corresponds to the processing surface of the upper die. The processing surface of the upper die includes a first portion and a second portion. On the processing surface of the upper die, the first portion extends toward a side opposite to the lower die and toward the inner circumferential side of the upper die in a cross-sectional view including a central axis of the upper die and the lower die. On the processing surface of the upper die, the second portion has a linear shape and is disposed on the inner circumferential side of the upper die relative to the first portion, in a cross-sectional view including the central axis. The processing surface of the lower die includes a first portion and a second portion. On the processing surface of the lower die, the first portion is disposed at a position corresponding to the first portion of the processing surface of the upper die, and is continuous with a side surface of the lower die. On the processing surface of the lower die, the second portion is continuous with the first portion. The second portion of the processing surface of the lower die has a shape corresponding to the second portion of the processing surface of the upper die. The upper die includes a first upper die and a second upper die. The first upper die includes at least a portion of the first portion of the processing surface of the upper die. The first upper die has an annular shape. The second upper die is separate from the first upper die. The second upper die is disposed on an inner side of the first upper die. The second upper die includes at least a portion of the second portion of the processing surface of the upper die (ninth configuration).

Hereinafter, embodiments of the present disclosure will be described with reference to the drawings. In the drawings, the same or corresponding configurations are denoted by the same reference signs, and repeated descriptions will not be given.

### <First Embodiment>

### [Cylindrical Member]

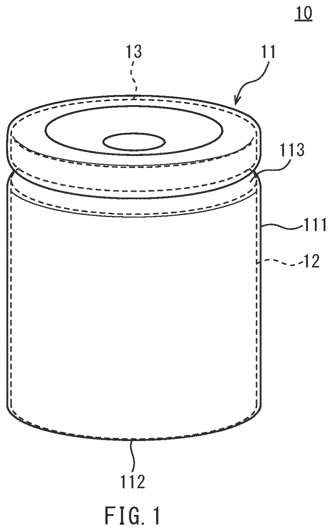

FIG. 1 is a schematic perspective view showing a cylindrical member 10 manufactured using a manufacturing method according to this embodiment. The cylindrical member 10 is, for example, a battery. The cylindrical member 10 may also be a pipe, a pipe joint, or the like. In this embodiment, an example in which the cylindrical member 10 is a battery will be described.

As shown in FIG. 1, the cylindrical member 10 includes a battery case 11, an electrode body 12, and a sealing body 13. The battery case 11 includes a circumferential wall 111, a bottom plate 112, and a bead 113. The circumferential wall 111 has a substantially cylindrical shape. The bottom plate 112 blocks one end of the circumferential wall 111 in the axial direction. The bead 113 is disposed on the other end side of the circumferential wall 111 in the axial direction. The bead 113 is provided on the circumferential wall 111. The bead 113 has a shape protruding inward from the circumferential wall 111 in the radial direction of the circumferential wall 111. The bead 113 extends over the entire circumference of the circumferential wall 111 and has an annular shape.

The electrode body 12 is accommodated in the battery case 11. The electrode body 12 is disposed between the bottom plate 112 and the bead 113 in the axial direction of the circumferential wall 111. The electrode body 12 is a known electrode body selected according to the type of battery. For example, when the cylindrical member 10 is a lithium ion secondary battery, the electrode body 12 is an electrode body for a lithium-ion secondary battery.

The sealing body 13 is accommodated in the battery case 11. The sealing body 13 is placed on the bead 113 on the inner side of the circumferential wall 111. The sealing body 13 is crimped and fixed to the battery case 11. More specifically, the sealing body 13 is fixed to the battery case 11 by bending the end portion of the circumferential wall 111 of the battery case 11 inward near the sealing body 13. The sealing body 13 is a known sealing body generally used for a battery.

### [Method for Manufacturing Cylindrical Member]

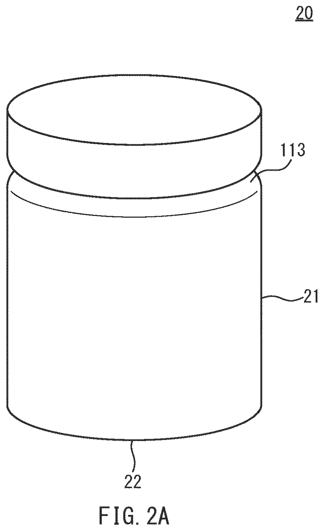

Hereinafter, a method for manufacturing the cylindrical member 10 will be described with reference to FIG. 2A to FIG. 2D. The method for manufacturing the cylindrical member 10 includes a preparation step and a bending processing step.

### (Preparation Step)

Referring to FIG. 2A, a workpiece 20 is prepared in the preparation step. In this embodiment, the workpiece 20 has a bottomed cylindrical shape. That is to say, the workpiece 20 includes a cylindrical circumferential wall 21 and a bottom plate 22 that blocks one end of the circumferential wall 21 in the axial direction. The other end of the circumferential wall 21 in the axial direction is an open end. The workpiece 20 is a material for the battery case 11 above (FIG. 1). In this embodiment, before the bending processing step, the bead 113 is formed on the circumferential wall 21 of the workpiece 20.

The workpiece 20 is made of, for example, a steel material. The workpiece 20 may be made of a plated steel material, a stainless steel material, or the like. When the cylindrical member 10 (FIG. 1) to be produced is a battery as in this embodiment, the workpiece 20 is preferably made of a nickel-plated steel material. The steel material forming the workpiece 20 can have a tensile strength of 290 MPa or more. The steel material may have a tensile strength of 300 MPa or more, 330 MPa or more, or 350 MPa or more. The steel material may have a tensile strength of 380 MPa or more or 400 MPa or more. The bottomed cylindrical workpiece 20 can be formed by conducting, for example, drawing processing on a steel plate.

However, the workpiece 20 need not necessarily be made of a steel material. The workpiece 20 need only be made of metal. The workpiece 20 may also be made of, for example, aluminum, titanium, or copper, or an alloy thereof.

An end portion of the workpiece 20 on the open side has a plate thickness of, for example, 3.0 mm or less. The workpiece 20 may have a plate thickness of 3.0 mm or less throughout. The end portion of the workpiece 20 on the open side has a plate thickness of, for example, 0.1 mm or more. The workpiece 20 may have a plate thickness of 0.1 mm or more throughout.

### (Bending processing step)

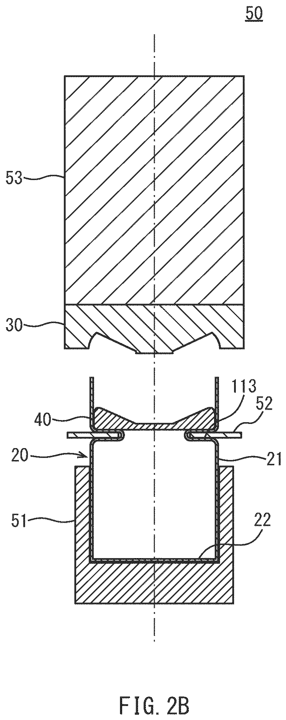

The bending processing step is a step of bending the end portion of the workpiece 20 on the open side to the inner circumferential side of the workpiece 20. Referring to FIG. 2B, the end portion of the workpiece 20 is bent using a die including an upper die 30 and a lower die 40. During the bending processing step, the workpiece 20, the upper die 30, and the lower die 40 are placed in a processing apparatus 50. The processing apparatus 50 includes, for example, a holder 51, a pressing die 52, and a cylinder 53.

The holder 51 holds the workpiece 20. The holder 51 is configured to accommodate, for example, a portion of the workpiece 20 that is closer to the bottom plate 22 than the bead 113. On the sheet of FIG. 2B, the workpiece 20 is held by the holder 51 with the bottom plate 22 located on the lower side.

The pressing die 52 has, for example, a circular ring shape. The pressing die 52 may be split into a plurality of parts along its circumferential direction. The circular ring-shaped pressing die 52 is split into two parts, for example. By inserting an inner circumferential portion of the pressing die 52 into the bead 113 of the workpiece 20, the workpiece 20 is gripped by the pressing die 52.

The cylinder 53 is configured to be capable of extending and retracting along the axial direction of the workpiece 20. The cylinder 53 may be a fluid pressure cylinder such as a hydraulic or pneumatic cylinder, or may be an electric cylinder driven by a motor. The upper die 30 is attached to the cylinder 53. The lower die 40 is disposed in the workpiece 20 and faces the upper die 30 in the axial direction of the workpiece 20. In this embodiment, the lower die 40 is a battery sealing body 13 (FIG. 1). The lower die 40 is placed on the bead 113 of the workpiece 20.

In the bending processing step, the upper die 30 undergoes relative movement toward the lower die 40 and the workpiece 20 along the axial direction of the workpiece 20. In this embodiment, as the cylinder 53 extends, the upper die 30 moves downward and toward the lower die 40 and the workpiece 20.

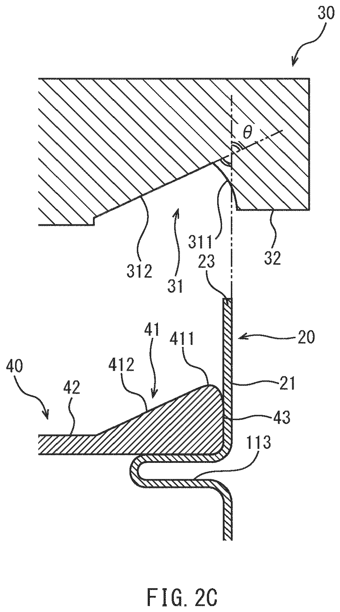

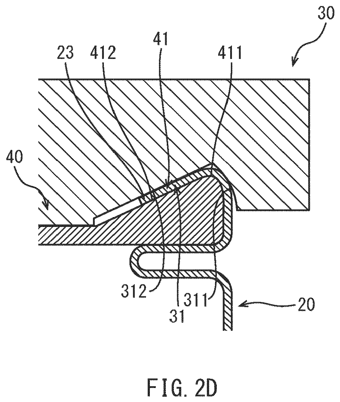

FIGS. 2C and 2D are longitudinal cross-sectional views of the workpiece 20, the upper die 30, and the lower die 40 (cross-sectional views including the central axis of the workpiece 20) in the bending processing step, and illustrate enlarged views of the vicinity of the end portion 23 of the workpiece 20. The end portion 23 is an end portion of the workpiece 20 on the open side, and is the portion to be bent in the bending processing step. Before the start of the bending processing step, the end portion 23 extends substantially parallel to the axial direction of the workpiece 20 in a cross-sectional view of the workpiece 20. Referring to FIG. 2C, the upper die 30 has a substantially round columnar shape and is disposed coaxially with the workpiece 20. The upper die 30 includes a recessed processing surface 31. The processing surface 31 is provided on one surface 32 of two surfaces of the upper die 30 in the axial direction. The surface 32 faces the workpiece 20 in the axial direction at the start of the bending processing step. The processing surface 31 is provided on the surface 32 of the upper die 30 at a position corresponding to the end portion 23 of the workpiece 20. That is, the processing surface 31 is provided at a position where the end portion 23 of the workpiece 20 can be processed.

The processing surface 31 includes a first portion 311 and a second portion 312. The first portion 311 and the second portion 312 each have a circular ring shape in a view taken along the axial direction of the workpiece 20.

The first portion 311 extends toward a side opposite to the workpiece 20 and the lower die 40 in the axial direction and toward the inner circumferential side of the workpiece 20 and the upper die 30, in a longitudinal cross-sectional view of the upper die 30. Before the start of the bending processing step, the first portion 311 faces the end portion 23 of the workpiece 20 in the axial direction. More specifically, an outer circumferential portion of the first portion 311 faces the end portion 23 that rises in the axial direction of the workpiece 20.

In this embodiment, the first portion 311 has a curved shape recessed in a cross-sectional view of the upper die 30. The first portion 311 can have an arc shape with a single radius of curvature. When the radius of curvature of the first portion 311 is represented by R and the plate thickness of the end portion 23 of the workpiece 20 is represented by t, R/t is, for example, 1.0 or more. R/t is preferably 1.2 or more and more preferably 1.5 or more. R/t is preferably 10.0 or less. R/t is more preferably 5.0 or less and even more preferably 3.0 or less. A central angle α of the first portion 311 is, for example, 45° or more. The central angle α is preferably 60° or more and more preferably 90° or more. The central angle α is 180° or less.

The second portion 312 is continuous with the first portion 311 on the inner side of the first portion 311. The second portion 312 is disposed on the inner circumferential side of the workpiece 20 and the upper die 30 relative to the first portion 311. In this embodiment, the second portion 312 extends from the first portion 311 to the inner circumferential side of the workpiece 20, that is, to the inner circumferential side of the upper die 30, in a longitudinal cross-sectional view of the upper die 30. The second portion 312 has a linear shape in a cross-sectional view of the upper die 30. In this embodiment, the second portion 312 is inclined with respect to the radial direction to approach the lower die 40 toward the inner circumferential side of the workpiece 20. When it is presumed that the upper die 30 side is the top and the workpiece 20 side is the bottom, an inner circumferential end portion of the second portion 312 is located below an outer circumferential end portion of the second portion 312. Before the start of the bending processing step, the second portion 312 is disposed on the inner circumferential side with respect to the end portion 23 of the workpiece 20.

In a longitudinal cross-sectional view of the upper die 30 and the workpiece 20, an angle θ formed between an extension line of the second portion 312 of the processing surface 31 of the upper die 30 and an extension line of the end portion 23 of the workpiece 20 before the start of the bending processing step is 45° or more and less than 90°. The angle θ is preferably 50° or more and more preferably 60° or more. The angle θ may be, for example, 85° or less, and is preferably 80° or less.

The lower die 40 has a substantially round columnar shape and is disposed coaxially with the workpiece 20 and the upper die 30. The lower die 40 has a smaller diameter than the upper die 30. The lower die 40 includes a protruding processing surface 41 corresponding to the processing surface 31 of the upper die 30. Of two surfaces of the lower die 40 in the axial direction, the processing surface 41 is provided on the surface 42 facing the upper die 30 when the die is in use. The processing surface 41 includes a first portion 411 and a second portion 412. The first portion 411 and the second portion 412 each have a circular ring shape when viewed along the axial direction of the workpiece 20.

The first portion 411 is provided continuous with a side surface 43 of the lower die 40. The side surface 43 extends along the circumferential wall 21 of the workpiece 20 in a longitudinal cross-sectional view of the lower die 40. The first portion 411 has, for example, a protruding curved shape in a longitudinal cross-sectional view of the lower die 40. The first portion 411 is disposed at a position corresponding to the first portion 311 of the processing surface 31 of the upper die 30. However, the first portion 411 need not have a shape corresponding to the first portion 311 of the processing surface 31 of the upper die 30.

The second portion 412 is continuous with the first portion 411. The second portion 412 is disposed at a position corresponding to the second portion 312 of the processing surface 31 of the upper die 30. At least a portion of the second portion 412 has a shape corresponding to the second portion 312 of the processing surface 31 of the upper die 30. That is, at least a portion of the second portion 412 of the processing surface 41 of the lower die 40 has a linear shape that is substantially parallel to the second portion 312 of the processing surface 31 of the upper die 30 in a longitudinal cross-sectional view of the upper die 30 and the lower die 40.

Materials of the upper die 30 and the lower die 40 are not particularly limited. The upper die 30 and the lower die 40 may be made of a metallic material or a non-metallic material. For example, when the lower die 40 is a battery sealing body 13 (FIG. 1) as in this embodiment, the lower die 40 may be made of, for example, steel, plated steel, stainless steel, aluminum, titanium, copper, plastic, or the like, or may be a composite of components made of any of these materials.

Referring to FIG. 2D, when the upper die 30 moves toward the workpiece 20 in the axial direction, the end portion 23 of the workpiece 20 is bent to the inner circumferential side by the processing surface 31 of the upper die 30. More specifically, as the upper die 30 moves toward the workpiece 20, the end portion 23 of the workpiece 20 is guided by the first portion 311 of the processing surface 31 to the inner circumferential side and begins to bend. Finally, the second portion 312 of the processing surface 31 clamps the end portion 23 of the workpiece 20 together with the lower die 40, and the upper die 30 stops. The second portion 312 of the processing surface 31 of the upper die 30 clamps the end portion 23 of the workpiece 20 between the second portion 312 and the second portion 412 of the processing surface 41 of the lower die 40. The second portions 312 and 412 that are linear in a longitudinal cross-sectional view clamp the end portion 23, and thus at least a portion of the end portion 23 that is bent to the inner circumferential side is formed into a linear shape.

The cylindrical member 10 shown in FIG. 1 can be obtained through such a bending processing step. After the upper die 30 is raised by driving the cylinder 53, the cylindrical member 10 is removed from the processing apparatus 50 (FIG. 2B).

### [Effects]

In the method for manufacturing the cylindrical member 10 according to this embodiment, the end portion 23 of the workpiece 20 is bent to the inner circumferential side simply by moving the upper die 30 toward the workpiece 20 and the lower die 40. The upper die 30 is driven only in the axial direction of the workpiece 20, and bends the end portion 23 of the workpiece 20 with a single approaching motion. Therefore, the bending processing step is not complicated, and the end portion 23 of the workpiece 20 can be easily bent.

In this embodiment, in addition to the first portion 311 that guides the end portion 23 of the workpiece 20 to the inner circumferential side, the processing surface 31 of the upper die 30 is provided with the second portion 312 that clamps the end portion 23 of the workpiece 20 together with the lower die 40. The second portion 312 has a linear shape in a longitudinally cross-sectional view of the upper die 30, and clamps the end portion 23 of the workpiece 20 together with the lower die 40 in the bending processing step. As a result, at least a portion of the end portion 23 of the workpiece 20 that is bent to the inner circumferential side can be formed into a linear shape.

In this embodiment, the angle (acute angle) θ formed between the extension line of the second portion 312 of the processing surface 31 of the upper die 30 and the extension line (the extension line of the side surface 43 of the lower die 40) of the end portion 23 of the workpiece 20 before the start of the bending processing step is 45° or more. In this case, when the end portion 23 of the workpiece 20 is bent by the upper die 30 to the inner circumferential side, the end portion 23 is less likely to get caught on the boundary between the first portion 311 and the second portion 312 of the processing surface 31 of the upper die 30, thereby suppressing the occurrence of buckling in the end portion 23. In order to make buckling of the end portion 23 less likely to occur, the angle θ is preferably 50° or more and more preferably 60° or more. With the method for manufacturing the cylindrical member 10 according to this embodiment, even when the workpiece 20 is made of a relatively hard material, such as a steel plate with a tensile strength of 290 MPa or more, or even when the plate thickness of the end portion 23 of the workpiece 20 is relatively small, such as 3.0 mm or less, buckling of the end portion 23 in the bending processing step can be stably suppressed.

In the bending processing step, the end portion 23 of the workpiece 20 is guided by the first portion 311 of the processing surface 31 of the upper die 30 to the inner circumferential side. That is, the end portion 23 of the workpiece 20 is bent to the inner circumferential side of the workpiece 20 to follow the first portion 311 of the processing surface 31 of the upper die 30. In this embodiment, the first portion 311 has a curved shape recessed inward of the upper die 30 in a longitudinal cross-sectional view. In this case, the end portion 23 of the workpiece 20 tends to follow the first portion 311 and the end portion 23 can be smoothly bent.

In this embodiment, the ratio R/t of the radius of curvature R of the first portion 311 to the plate thickness t of the end portion 23 of the workpiece 20 is, for example, 1.0 or more. In this case, since the bending radius is not excessively small relative to the plate thickness t of the end portion 23 of the workpiece 20, the difference in line length between the bending surface of the end portion 23 and the neutral axis is unlikely to be excessively large. Therefore, it is possible to suppress the formation of a crack in the end portion 23 when the end portion 23 of the workpiece 20 is pressed into the first portion 311 of the processing surface 31 of the upper die 30 and bent.

In this embodiment, the ratio R/t of the radius of curvature R of the first portion 311 to the plate thickness t of the end portion 23 of the workpiece 20 is preferably 10.0 or less. In this case, the bending radius is not excessively large relative to the plate thickness t of the end portion 23 of the workpiece 20. Therefore, it is possible to suppress the occurrence of springback in the end portion 23 bent to the inner circumferential side, and inhibit shaping failure of the end portion 23.

In this embodiment, the central angle α of the first portion 311 is preferably 45° or more. In this case, buckling of the end portion 23 of the workpiece 20 can be made less likely to occur in the bending processing step. The central axis α of the first portion 311 is preferably 180° or less in consideration of ease of release of the upper die 30.

### <Second Embodiment>

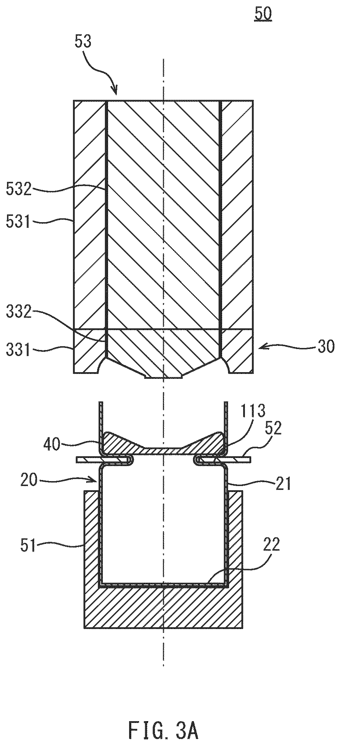

FIGS. 3A to 3D are schematic diagrams for illustrating a method for manufacturing the cylindrical member 10 according to a second embodiment (FIG. 1). The manufacturing method according to the second embodiment differs from the manufacturing method according to the first embodiment in the configuration of the upper die 30 used in the bending processing step. In the manufacturing method according to the second embodiment, after a preparation step similar to that in the first embodiment, a bending processing step described below is carried out.

Referring to FIG. 3A, the upper die 30 includes a first upper die 331 and a second upper die 332. The second upper die 332 is separate from the first upper die 331. The first upper die 331 has an annular shape in a view taken along the axial direction of the workpiece 20. The second upper die 332 is disposed on the inner side of the annular first upper die 331.

As in the first embodiment, the upper die 30 is attached to the cylinder 53 of the processing apparatus 50. In this embodiment, the cylinder 53 includes a first cylinder 531 and a second cylinder 532. The first cylinder 531 is configured to be capable of extending and retracting along the axial direction of the workpiece 20. The first upper die 331 is attached to the first cylinder 531. The second cylinder 532 is configured to be capable of extending and retracting along the axial direction of the workpiece 20, independent of the first cylinder 531. The second upper die 332 is attached to the second cylinder 532. The first cylinder 531 and the second cylinder 532 may each be a fluid pressure cylinder such as a hydraulic or pneumatic cylinder, or may be an electric cylinder driven by a motor.

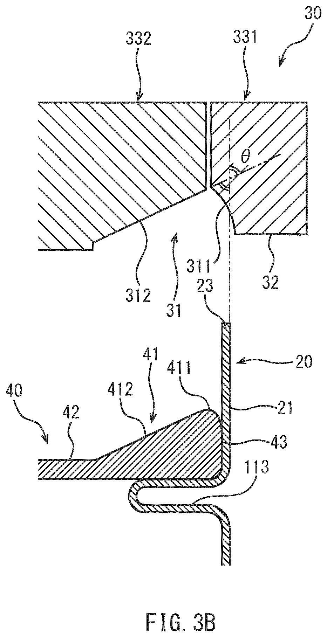

Referring to FIG. 3B, the first upper die 331 includes at least a portion of the first portion 311 of the processing surface 31. In an example of this embodiment, the entire first portion 311 is included in the first upper die 331. The second upper die 332 includes at least a portion of the second portion 312 of the processing surface 31. In an example of this embodiment, the entire second portion 312 is included in the second upper die 332. That is, in this embodiment, in a longitudinal cross-sectional view of the upper die 30, a parting line between the first upper die 331 and the second upper die 332 coincides with the boundary between the first portion 311 having a recessed curved shape and the second portion 312 having a linear shape. However, the parting line between the first upper die 331 and the second upper die 332 need not necessarily coincide with the boundary between the first portion 311 and the second portion 312. The parting line between the first upper die 331 and the second upper die 332 can be provided, for example, in a range from the center of the first portion 311 to the center of the second portion 312 in the radial direction of the workpiece 20.

In this embodiment, in a longitudinal cross-sectional view of the upper die 30 and the workpiece 20, it is sufficient that the angle θ formed between the extension line of the second portion 312 of the processing surface 31 of the upper die 30 and the extension line of the end portion 23 of the workpiece 20 before the start of the bending processing step is 0° or more, but the angle θ is usually larger than 0°. Unlike the first embodiment, the angle θ may be less than 45°. However, the angle θ may be 45° or more as in the first embodiment. The angle θ is preferably 50° or more and more preferably 60° or more. The angle θ is, for example, less than 90°. The angle θ is preferably 85° or less and more preferably 80° or less. When the angle θ is 0°, in a longitudinal cross-sectional view of the upper die 30 and the workpiece 20, the second portion 312 of the processing surface 31 of the upper die 30 is substantially parallel to the end portion 23 of the workpiece 20 before the start of the bending processing step.

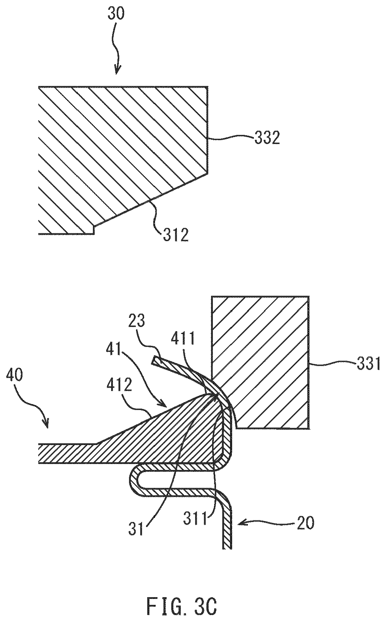

Referring to FIG. 3C, in the bending processing step, the first upper die 331 undergoes relative movement toward the workpiece 20 in the axial direction prior to the second upper die 332. In this embodiment, the first upper die 331 moves toward the workpiece 20 due to extension of the first cylinder 531 (FIG. 3A). As a result, first, the end portion 23 of the workpiece 20 is guided by the first upper die 331 to the inner circumferential side. More specifically, since the first upper die 331 includes at least a portion of the first portion 311 of the processing surface 31, when the first upper die 331 moves toward the workpiece 20, the end portion 23 of the workpiece 20 is bent to the inner circumferential side along the first portion 311.

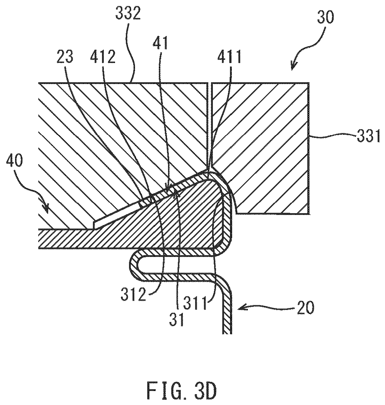

Referring to FIG. 3D, the end portion 23 is guided by the first upper die 331 to the inner circumferential side of the workpiece 20, and the end portion 23 is then clamped by the second upper die 332 and the lower die 40. The first upper die 331 undergoes relative movement toward the workpiece 20 along the axial direction, and then the second upper die 332 undergoes relative movement toward the workpiece 20 along the axial direction. The second upper die 332 may start moving toward the workpiece 20, for example, after or immediately before the first upper die 331, which has moved toward the workpiece 20, stops. In this embodiment, the second upper die 332 moves toward the workpiece 20 due to extension of the second cylinder 532 (FIG. 3A). The second upper die 332 presses the end portion 23 of the workpiece 20 against the lower die 40 by the second portion 312 of the processing surface 31. The end portion 23 of the workpiece 20 is clamped by the second portion 312 of the processing surface 31 of the upper die 30 and the second portion 412 of the processing surface 41 of the lower die 40.

Even in the manufacturing method according to this embodiment, since the upper die 30 is driven only in the axial direction of the workpiece 20, the bending processing step is not complicated, and the end portion 23 of the workpiece 20 can be easily bent. Also, in the bending processing step, at least a portion of the end portion 23 of the workpiece 20 that is bent to the inner circumferential side can be formed into a linear shape.

In the manufacturing method according to this embodiment, the end portion 23 of the workpiece 20 is guided to the inner circumferential side by the first portion 311 of the processing surface 31 of the first upper die 331, and then the second portion 312 of the processing surface 31 of the second upper die 332 clamps the end portion 23 of the workpiece 20 together with the lower die 40. That is, stepwise bending processing is performed on the end portion 23 of the workpiece 20. This makes it possible to suppress the occurrence of buckling in the end portion 23 of the workpiece 20 in the bending processing step. In particular, even when the angle θ of the second portion 312 is small, for example, less than 45°, buckling of the end portion 23 of the workpiece 20 is unlikely to occur. However, if the angle θ of the second portion 312 is set to 45° or more, buckling and wrinkling are less likely to occur during the bending processing step. From the viewpoint of further suppressing buckling and wrinkling, the angle θ of the second portion 312 is preferably 50° or more and more preferably 60° or more.

In this embodiment, the upper die 30 is split into two parts, namely, the first upper die 331 and the second upper die 332. However, the upper die 30 may be split into three or more parts. For example, at least one of the first upper die 331 and the second upper die 332 may be split into a plurality of parts. In this case, in the bending processing step, stepwise bending processing is performed on the end portion 23 of the workpiece 20 by successively moving the split upper dies toward the workpiece 20 from the split upper die positioned on the outer circumferential side of the workpiece 20.

Although embodiments according to the present disclosure have been described above, the present disclosure is not limited to the above-described embodiments, and various modifications can be made without departing from the spirit of the present disclosure.

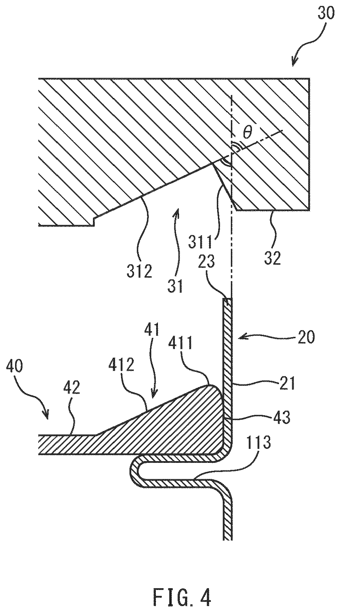

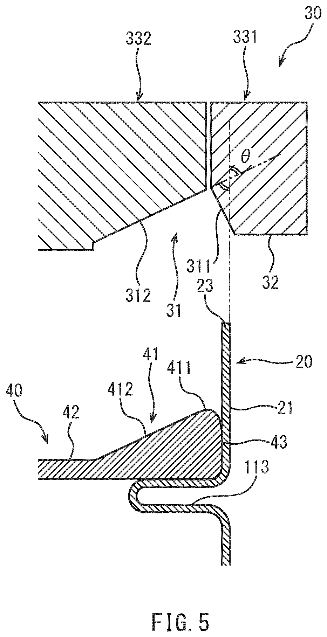

In the above embodiments, the first portion 311 of the processing surface 31 of the upper die 30 has a curved shape recessed inward of the upper die 30 in a longitudinal cross-sectional view. However, as shown in FIGS. 4 and 5, the first portion 311 may have a linear shape in a longitudinal cross-sectional view of the upper die 30. When the first portion 311 has a linear shape, the upper die 30 can be easily manufactured.

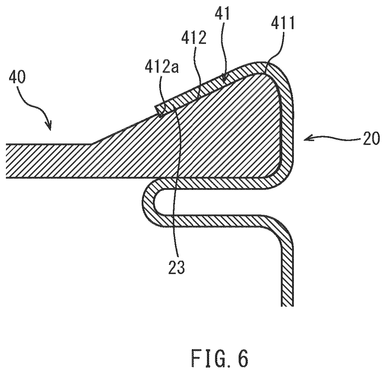

In the above embodiments, the second portion 412 of the processing surface 41 of the lower die 40 is an overall flat inclined surface. However, as shown in FIG. 6, the second portion 412 may be provided with a level difference 412a. For example, by recessing the outer circumferential side of the level difference 412a relative to the inner circumferential side of the level difference 412a by an amount that is less than the plate thickness of the end portion 23 of the workpiece 20, the adhesion of the end portion 23 to the lower die 40 can be improved in the bending processing step.

In the above embodiments, the cylindrical member 10 is a battery. Therefore, in the bending processing step, the sealing body 13 that functions as a battery lid is used as the lower die 40. However, the cylindrical member 10 need not necessarily be a battery. For example, when the cylindrical member 10 is a pipe, a pipe joint, or the like, the lower die 40, which is not the sealing body 13, can be used.

In the above embodiments, the workpiece 20 and the cylindrical member 10 each have a bottomed cylindrical shape. That is, the workpiece 20 and the cylindrical member 10 are respectively provided with bottom plates 22 and 112. However, it is also possible to eliminate the bottom plates 22 and 112 respectively from the workpiece 20 and the cylindrical member 10. For example, when the cylindrical member 10 is a pipe, a pipe joint, or the like, the workpiece 20 and the cylindrical member 10 have a bottomless cylindrical shape. When the cylindrical member 10 is not a battery, the workpiece 20 and the cylindrical member 10 do not need to have the beads 113 on their circumferential walls 21 and 111.

In the above embodiments, as a result of the upper die 30 moving toward the workpiece 20, the end portion 23 of the workpiece 20 is bent to the inner circumferential side. However, by moving the workpiece 20 toward the upper die 30, the end portion 23 of the workpiece 20 may be bent by the upper die 30 to the inner circumferential side. Alternatively, it is also possible to bend the end portion 23 of the workpiece 20 by moving both the upper die 30 and the workpiece 20.

In the above embodiments, the upper die 30 is disposed above the workpiece 20 and the lower die 40 in the bending processing step. However, the upper die 30 need not necessarily be disposed above the workpiece 20 and the lower die 40. For example, the upper die 30 may be disposed below the workpiece 20 and the lower die 40. It is sufficient that the upper die 30 is capable of undergoing relative movement toward and away from the workpiece 20 and the lower die 40 along the axial direction of the workpiece 20.

### EXAMPLES

Hereinafter, the present disclosure will be described in more detail with reference to examples. However, the present disclosure is not limited to the following examples.

Regarding the method for manufacturing a cylindrical member described in the first and second embodiments, the CAE analysis was conducted using commercially available analysis software (LS-DYNA, manufactured by JSOL Corporation) to evaluate the formation of a crack and the occurrence of buckling in the end portion of the workpiece that is bent.

The common conditions for the CAE analysis are as follows.

### (Workpiece)

- Shape: bottomed cylindrical shape
- Material: nickel-plated steel plate
- Tensile strength: 330 MPa
- Plate thickness t: 0.4 mm
- Outer diameter: 40 mm
- Height: 30 mm

### (Bending Processing)

- Lubricating oil: none
- Length of end portion of workpiece (portion to be bent): 7.5 mm

Table 1 shows other analysis conditions and evaluation results.

**[Table 1]**

| Test No. | Step | First portion of processing surface of upper die | R/t | α (°) | θ (°) | Formation of crack | Occurrence of buckling |
|---|---|---|---|---|---|---|---|
| 1 | Single-step type | Recessed curved shape | 1.0 | 45 | 30 | No | Yes |
| 2 | Single-step type | Recessed curved shape | 1.0 | 45 | 40 | No | Yes |
| 3 | Single-step type | Recessed curved shape | 1.0 | 45 | 45 | No | No |
| 4 | Single-step type | Recessed curved shape | 1.0 | 45 | 50 | No | No |
| 5 | Multiple-step type | Recessed curved shape | 1.0 | 45 | 0 | No | No |
| 6 | Multiple-step type | Recessed curved shape | 1.0 | 45 | 10 | No | No |
| 7 | Multiple-step type | Recessed curved shape | 1.0 | 45 | 30 | No | No |
| 8 | Multiple-step type | Recessed curved shape | 1.0 | 45 | 40 | No | No |
| 9 | Multiple-step type | Recessed curved shape | 1.0 | 45 | 45 | No | No |
| 10 | Multiple-step type | Recessed curved shape | 1.0 | 45 | 50 | No | No |
| 11 | Multiple-step type | Recessed curved shape | 1.0 | 45 | 80 | No | No |
| 12 | Multiple-step type | Recessed curved shape | 1.0 | 45 | 120 | No | No |
| 13 | Single-step type | Linear shape | 1.0 | 45 | 30 | No | Yes |
| 14 | Single-step type | Linear shape | 1.0 | 45 | 40 | No | Yes |
| 15 | Single-step type | Linear shape | 1.0 | 45 | 45 | No | No |
| 16 | Single-step type | Linear shape | 1.0 | 45 | 50 | No | No |
| 17 | Multiple-step type | Linear shape | 1.0 | 45 | 0 | No | No |
| 18 | Multiple-step type | Linear shape | 1.0 | 45 | 10 | No | No |
| 19 | Multiple-step type | Linear shape | 1.0 | 45 | 30 | No | No |
| 20 | Multiple-step type | Linear shape | 1.0 | 45 | 40 | No | No |
| 21 | Multiple-step type | Linear shape | 1.0 | 45 | 45 | No | No |
| 22 | Multiple-step type | Linear shape | 1.0 | 45 | 50 | No | No |
| 23 | Multiple-step type | Linear shape | 1.0 | 45 | 80 | No | No |
| 24 | Multiple-step type | Linear shape | 1.0 | 45 | 120 | No | No |

In the step column of Table 1, "single-step type" means that bending processing (bending and crimping) step was carried out using a non-split upper die, as in the first embodiment, and "multiple-step type" means that the bending and crimping step was carried out stepwise using a two-piece upper die, as in the second embodiment. Also, in Table 1, the wording "the first portion of the processing surface of the upper die having a 'recessed curved shape'" means that a portion of the processing surface of the upper die that guides the end portion of the workpiece has a curved shape recessed in a longitudinal cross-sectional view, as in the first embodiment (FIG. 2C) and the second embodiment (FIG. 3B). The wording "the first portion of the processing surface of the upper die having a 'linear shape'" means that the portion has a linear shape in a longitudinal cross-sectional view, as shown in FIGS. 4 and 5.

As shown in Table 1, in the single-step type, when the angle θ of the linear portion (second portion) of the upper die relative to the end portion of the workpiece before the bending and crimping step was less than 45°, the end portion of the workpiece buckled during the bending and crimping step, regardless of the shape of the guiding portion (first portion) of the upper die. On the other hand, when the angle θ was 45° or more, the end portion of the workpiece did not buckle during the bending and crimping step, regardless of the shape of the guiding portion. Therefore, it can be seen that, in a case where the end portion of the workpiece is to be bent to the inner circumferential side using a non-split upper die, when the angle θ of the linear portion of the upper die is 45° or more, the end portion can be formed into a linear shape while the occurrence of buckling of the end portion is suppressed.

As shown in Table 1, in the multiple-step type, in both a case where the guiding portion (first portion) of the upper die has a recessed curved shape and a case where the guiding portion has a linear shape, buckling of the end portion of the workpiece did not occur in the bending and crimping step, regardless of the angle θ of the linear shape (second portion) of the upper die relative to the end portion of the workpiece before the bending and crimping step. Therefore, it can be seen that, by bending the end portion of the workpiece to the inner circumferential side using a split upper die, the end portion can be formed into a linear shape while the occurrence of buckling of the end portion is suppressed.

### REFERENCE SIGNS LIST

- 10:: Cylindrical member
- 12:: Electrode body
- 13:: Sealing body
- 20:: Workpiece
- 23:: End portion
- 30:: Upper die
- 31:: Processing surface
- 311:: First portion
- 312:: Second portion
- 32:: Surface
- 331:: First upper die
- 332:: Second upper die
- 40:: Lower die
- 41:: Processing surface
- 411:: First portion
- 412:: Second portion
- 42:: Surface
- 43:: Side surface

## Claims

1. A method for manufacturing a cylindrical member, comprising:
a preparation step of preparing a cylindrical workpiece; and
a bending processing step of bending an end portion of the workpiece in an axial direction of the workpiece to an inner circumferential side of the workpiece using a lower die that is disposed in the workpiece and an upper die that undergoes relative movement toward the workpiece along the axial direction,
wherein the upper die includes a recessed processing surface provided at a position corresponding to the end portion on a surface of the upper die facing the workpiece in the axial direction,
the processing surface includes
a first portion that extends toward a side opposite to the workpiece in the axial direction and toward the inner circumferential side of the workpiece, in a cross-sectional view including a central axis of the workpiece, and guides the end portion to the inner circumferential side of the workpiece in the bending processing step, and
a second portion that is continuous with the first portion, has a linear shape and extends from the first portion to the inner circumferential side of the workpiece, in a cross-sectional view including the central axis, and clamps the end portion together with the lower die in the bending processing step, and
an angle θ formed between an extension line of the second portion and an extension line of the end portion before a start of the bending processing step in a cross-sectional view including the central axis is 45° or more and less than 90°.

2. A method for manufacturing a cylindrical member, comprising:
a preparation step of preparing a cylindrical workpiece; and
a bending processing step of bending an end portion of the workpiece in an axial direction of the workpiece to an inner circumferential side of the workpiece using a lower die that is disposed in the workpiece and an upper die that undergoes relative movement toward the workpiece along the axial direction,
wherein the upper die includes a recessed processing surface provided at a position corresponding to the end portion on a surface of the upper die facing the workpiece in the axial direction,
the processing surface includes
a first portion that extends toward a side opposite to the workpiece in the axial direction and toward the inner circumferential side of the workpiece, in a cross-sectional view including a central axis of the workpiece, and
a second portion that has a linear shape and is disposed on the inner circumferential side of the workpiece relative to the first portion, in a cross-sectional view including the central axis,
the upper die includes
a first upper die that includes at least a portion of the first portion, and
a second upper die that is separate from the first upper die, is disposed on the inner circumferential side of the workpiece relative to the first upper die, and includes at least a portion of the second portion, and
in the bending processing step, the end portion is guided by the first upper die to the inner circumferential side of the workpiece, and the end portion is then clamped by the second upper die and the lower die.

3. The manufacturing method according to claim 1 or 2,
wherein the first portion has a curved shape recessed in a cross-sectional view including the central axis.

4. The manufacturing method according to claim 1 or 2,
wherein the first portion has a linear shape in a cross-sectional view including the central axis.

5. The manufacturing method according to claim 1 or 2,
wherein the workpiece is made of a steel material having a tensile strength of 290 MPa or more.

6. The manufacturing method according to claim 1 or 2,
wherein the end portion of the workpiece has a plate thickness of 3.0 mm or less.

7. The manufacturing method according to claim 1 or 2,
wherein the cylindrical member is a bottomed cylindrical battery that accommodates an electrode body, and
the lower die is a sealing body.

8. A die for bending an end portion of a cylindrical workpiece to an inner circumferential side, the die comprising:
a round columnar upper die including a recessed processing surface on one surface of two surfaces of the upper die in an axial direction; and
a round columnar lower die including a protruding processing surface that corresponds to the processing surface of the upper die on, of two surfaces of the lower die in the axial direction, a surface facing the upper die when the die is in use,
the processing surface of the upper die includes
a first portion that extends toward a side opposite to the lower die and toward the inner circumferential side of the upper die, in a cross-sectional view including a central axis of the upper die and the lower die, and
a second portion that is continuous with the first portion, and has a linear shape and extends from the first portion to the inner circumferential side of the upper die, in a cross-sectional view including the central axis,
the processing surface of the lower die includes
a first portion that is disposed at a position corresponding to the first portion of the processing surface of the upper die, and is continuous with a side surface of the lower die, and
a second portion that is continuous with the first portion of the processing surface of the lower die, and has a shape corresponding to the second portion of the processing surface of the upper die, and
an angle θ formed between an extension line of the second portion of the processing surface of the upper die and an extension line of the side surface of the lower die in a cross-sectional view including the central axis is 45° or more and less than 90°.

9. A die for bending an end portion of a cylindrical workpiece to an inner circumferential side, the die comprising:
a round columnar upper die including a recessed processing surface on one surface of two surfaces of the upper die in an axial direction; and
a round columnar lower die including a protruding processing surface that corresponds to the processing surface of the upper die on, of two surfaces of the lower die in the axial direction, a surface facing the upper die when the die is in use,
the processing surface of the upper die includes
a first portion that extends toward a side opposite to the lower die and toward the inner circumferential side of the upper die, in a cross-sectional view including a central axis of the upper die and the lower die, and
a second portion that has a linear shape and is disposed on the inner circumferential side of the upper die relative to the first portion, in a cross-sectional view including the central axis,
the processing surface of the lower die includes
a first portion that is disposed at a position corresponding to the first portion of the processing surface of the upper die, and is continuous with a side surface of the lower die, and
a second portion that is continuous with the first portion of the processing surface of the lower die, and has a shape corresponding to the second portion of the processing surface of the upper die, and
the upper die includes
an annular first upper die that includes at least a portion of the first portion of the processing surface of the upper die, and
a second upper die that is separate from the first upper die, is disposed on an inner side of the first upper die, and includes at least a portion of the second portion of the processing surface of the upper die.
